# EUROPEAN PATENT APPLICATION

(11) **EP 1 818 914 A2**
(43) Date of publication of application: **15.08.2007**
(21) Application number: 06252190.1
(22) Date of filing: 24.04.2006
(51) Int. Cl.: G11B 5/00

(54) **Thin film magnetic head including helical coil**

(30) Priority: 13.02.2006 JP 2006035804
(71) Applicant: Fujitsu Ltd., Kawasaki-shi, Kanagawa 211-8588 (JP)
(72) Inventor: Aoki, Kenichiro, c/o Fujitsu Limited, Kawasaki-shi, Kanagawa 211-8588 (JP)
(74) Representative: Wilding, Frances Ward

(57) **Abstract**

A magnetic coil of a thin film magnetic head includes uniform upper (71) and lower (72) coil pattern pieces extending in the direction parallel to the medium-opposed surface at a constant width. A magnetic pole has the front end exposed at the medium-opposed surface. The magnetic pole extends backward from the front end. The length of the uniform lower (71) and upper (72) coil pattern pieces correspond to the width of the magnetic pole. The thin film magnetic head enables establishment of the narrowest width at the uniform upper and lower coil pattern pieces in the magnetic coil. The length of the magnetic pole is reduced as much as possible. The uniform upper and lower coil pattern pieces are also allowed to have a minimum length. The electric resistance is thus reduced in the magnetic coil. This results in establishment of an effective magnetic property in the thin film magnetic head.

## Description

### BACKGROUND OF THE INVENTION

### Field of the Invention:

The present invention relates to a thin film magnetic head utilized for writing magnetic bit data. In particular, the invention relates to a thin film magnetic head with a so-called helical coil.

### Description of the Prior Art:

A thin film magnetic head with a helical coil is often utilized as described in Japanese Patent Application Publication No. 5-250636. Connecting coil pattern piece are formed for connection between lower coil pattern pieces and corresponding upper coil pattern pieces. The connecting coil pattern piece is connected to the enlarged portions of the lower and upper coil pattern pieces. An increase in the connection area contributes to a reliably connection between the connecting coil pattern piece and the lower and upper coil pattern pieces.

The lower and upper coil pattern pieces respectively define narrow coil patterns. The individual narrow coil pattern extends at a constant width. A magnetic pole intersects all the narrow coil patterns. Although the narrowness contributes to a packed arrangement of the lower and upper coil pattern pieces, the narrowness inevitably causes an increase in the electric resistance of the thin filmmagnetic head. The thin filmmagnetic head thus cannot generate a larger magnetic field in response to the supply of high frequency write signals. The thin film magnetic head also suffers from an accelerated rise in temperature.

### SUMMARY OF THE INVENTION

It is accordingly an object of the present invention to provide a thin film magnetic head with a helical coil, capable of establishing an effective magnetic property.

According to the present invention, there is provided a thin film magnetic head comprising: uniform lower coil pattern pieces extending at a constant width, the uniform lower coil pattern pieces arranged in a direction perpendicular to a medium-opposed surface; uniform upper coil pattern pieces extending at a constant width, the uniform upper coil pattern pieces arranged in the direction perpendicular to the medium-opposed surface; an insulating layer interposed between the uniform lower coil pattern pieces and the uniform upper coil pattern pieces; enlarged lower coil pattern pieces each extending from opposite ends of the uniform lower coil pattern piece at a width getting larger at a position remoter from the uniform lower coil pattern piece; enlarged upper coil pattern pieces each extending from opposite ends of the uniform upper coil pattern piece at a width getting larger at a position remoter from the uniform upper coil pattern piece; a connecting coil pattern piece standing from an outer end of the enlarged lower coil pattern piece, the connecting coil pattern piece having the upper end connected to the outer end of the enlarged upper coil pattern piece; and a magnetic pole having the front end exposed at the medium-opposed surface, the magnetic pole extending in the insulating layer backward from the front end in the direction perpendicular to the medium-opposed surface, the length of the uniform lower coil pattern pieces and the uniform upper coil pattern pieces corresponding to the width of the magnetic pole.

The thin film magnetic head enables establishment of the narrowest width at the uniform lower and upper coil pattern pieces in the magnetic coil. The length of the magnetic pole is reduced as much as possible. The uniform lower and upper coil pattern pieces are also allowed to have a minimum length in the direction parallel to the medium-opposed surface. The electric resistance is thus surely reduced in the magnetic coil. This results in establishment of an efficient magnetic property in the thin film magnetic head. Moreover, the thin film magnetic head is prevented from excessively getting heated.

At least one of the enlarged upper and lower coil pattern pieces near the medium-opposed surface may expand backward from a plane extending in parallel with the medium-opposed surface. The thin film magnetic head allows the uniform upper and lower coil pattern pieces to be located as close to the medium-opposed surface as possible. The length of the magnetic pole is reduced as much as possible in the perpendicular to the medium-opposed surface.

The dimension of the cross section of the connecting coil pattern piece is set larger in the direction parallel to the medium-opposed surface than in the direction perpendicular to the medium-opposed surface. The connecting coil pattern piece can thus be located as close to the medium-opposed surface as possible, while the connecting coil pattern piece is allowed to have a larger cross-section. This contributes to the minimization of the total length of the magnetic coil.

The contours of the enlarged upper and lower coil pattern pieces may be defined along curved lines in the thin film magnetic head. No corner is formed along the contours of the enlarged lower and upper coil pattern pieces. This avoids radiation of noise from the enlarged lower and upper coil pattern pieces. A read head element is thus allowed to reliably read out magnetic bit data with less influence from the thin film magnetic head, when the thin film magnetic head is employed in combination with the read head element. If any corner were formed along the contours, noise radiates from the corner so that a read operation could be deteriorated at the read head element.

### BRIEF DESCRIPTION OF THE DRAWINGS

The above and other objects, features and advantages of the present invention will become apparent from the following description of the preferred embodiments in conjunction with the accompanying drawings, wherein:
Fig. 1 is a plan view schematically illustrating the inner structure of a hard disk drive (HDD) as an example of a magnetic recording medium drive;
Fig. 2 is an enlarged perspective view of a flying head slider according to a specific example;
Fig. 3 is an enlarged front view of a read/write magnetic head element observed at the medium-opposed surface or an air bearing surface (ABS) of the flying head slider;
Fig. 4 is a vertical sectional view taken along the line 4-4 in Fig. 3;
Fig. 5 is a fragmentary perspective view schematically illustrating the inner structure of a thin film magnetic head according to an embodiment of the present invention;
Fig. 6 is a horizontal sectional view taken along the line 6-6 in Fig. 4;
Fig. 7 is a horizontal sectional view taken along the line 7-7 in Fig. 4; and
Fig. 8 is a vertical sectional view, corresponding to Fig. 4, for schematically illustrating a thin film magnetic head according to another embodiment of the present invention.

### DESCRIPTION OF THE PREFERRED EMBODIMENTS

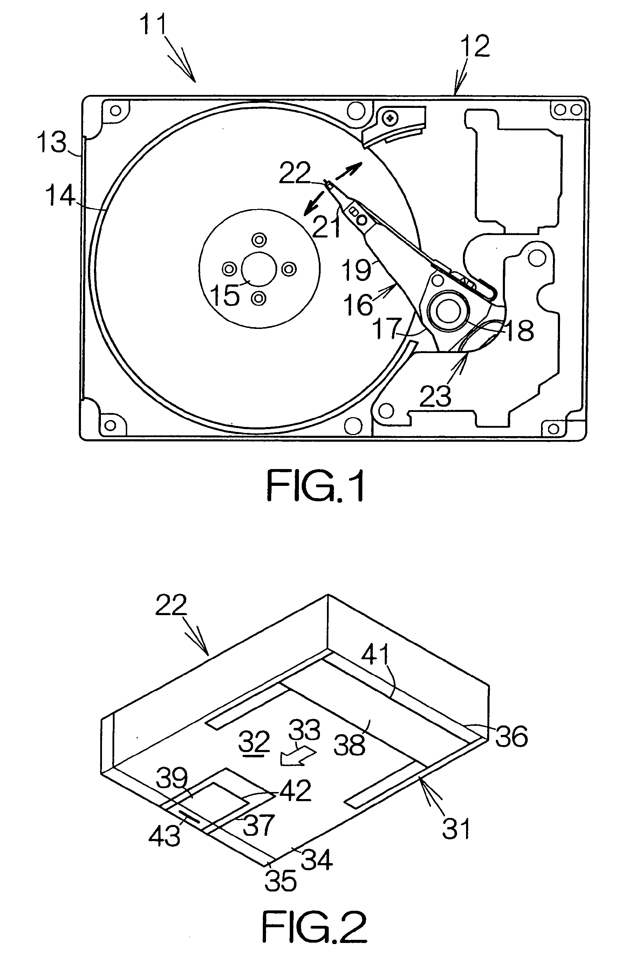

Fig. 1 schematically illustrates the inner structure of a hard disk drive, HDD, 11 as an example of a magnetic recording medium drive. The hard disk drive 11 includes an enclosure 12. The enclosure 12 includes an open box-shaped base 13 defining an inner space of a flat parallelepiped, for example. The base 13 may be made of a metallic material such as aluminum, for example. Molding process may be employed to form the base 13. A cover, not shown, is coupled to the base 13. The cover serves to close the opening of the base 13. Pressing process may be employed to form the cover out of a plate material, for example.

At least one magnetic recording disk 14 as a recording medium is enclosed in the inner space of the base 13. The magnetic recording disk 14 is a so-called vertical magnetic recording medium. The magnetic recording disk or disks 14 is mounted on the driving shaft of a spindle motor 15. The spindle motor 15 drives the magnetic recording disk or disks 14 at a higher revolution speed such as 5,400rpm, 7,200rpm, 10,000rpm, 15,000rpm, or the like.

A head actuator member, namely a carriage 16 is also enclosed in the inner space of the base 13. The carriage 16 includes a carriage block 17. The carriage block 17 is supported on a vertical support shaft 18 for relative rotation. Carriage arms 19 are defined in the carriage block 17. The carriage arms 19 are designed to extend in a horizontal direction from the vertical support shaft 18. The carriage block 17 may be made of aluminum, for example. Extrusion molding process may be employed to form the carriage block 17, for example.

A head suspension 21 is attached to the front end of the individual carriage arm 19. The head suspension 21 is designed to extend forward from the corresponding front end of the carriage arm 19. A gimbal spring, not shown, is connected to the front end of the individual head suspension 21. A flying head slider 22 is fixed on the surface of the gimbal spring. The gimbal spring allows the flying head slider 22 to change its attitude relative to the head suspension 21. An electromagnetic transducer is mounted on the flying head slider 22 as described later in detail.

When the magnetic recording disk 14 rotates, the flying head slider 22 is allowed to receive airflow generated along the rotating magnetic recording disk 14. The airflow serves to generate a positive pressure or lift and a negative pressure on the flying head slider 22. The flying head slider 22 is thus allowed to keep flying above the surface of the magnetic recording disk 14 during the rotation of the magnetic recording disk 14 at a higher stability established by the balance between the urging force of the head suspension 21 and the combination of the lift and the negative pressure.

When the carriage 16 is driven to swing around the vertical support shaft 18 during the flight of the flying head slider 22, the flying head slider 22 is allowed to move along the radial direction of the magnetic recording disk 14. This radial movement allows an electromagnetic transducer on the flying head slider 22 to cross the data zone between the innermost recording track and the outermost recording track. The electromagnetic transducer on the flying head slider 22 can thus be positioned right above a target recording track on the magnetic recording disk 14.

A power source such as a voice coil motor, VCM, 23 is coupled to the carriage block 17. The power source 23 allows the carriage block 17 to rotate around the vertical support shaft 18. The rotation of the carriage block 17 realizes the swinging movement of the carriage arms 19 and the head suspensions 21.

Fig. 2 illustrates a specific example of the flying head slider 22. The flying head slider 22 includes a slider body 31 in the form of a flat parallelepiped. Amedium-opposed surface or bottom surface 32 is defined over the slider body 31 so as to face the magnetic recording disk 14 at a distance. A flat base surface or reference surface is defined on the bottom surface 32. When the magnetic recording disk 14 rotates, airflow 33 acts on the bottom surface 32 in the direction from the inflow or front end toward the outflow or rear end of the slider body 31. The slider body 31 may comprise a base 34 made of Al₂O₃-TiC and a head protection layer 35 made of Al₂O₃ (alumina), for example. The head protection layer 35 is overlaid on the outflow or trailing end of the base 34.

A front rail 36 and a rear rail 37 are formed on the bottom surface 32 of the slider body 31. The front rail 36 stands upright from the flat surface of the bottom surface 32 near the inflow end of the slider body 31. The rear rail 37 stands upright from the flat surface of the bottom surface 32 near the outflow end of the slider body 31. Air bearing surfaces, ABSs, 38, 39 are respectively defined on the top surfaces of the front and rear rails 36, 37. The inflow ends of the air bearing surfaces 38, 39 are connected to the top surfaces of the front and rear rails 36, 37 through steps 41, 42, respectively.

The bottom surface 32 of the flying head slider 22 is designed to receive airflow 33 generated along the rotating magnetic recording disk 14. The steps 41, 42 serve to generate a larger positive pressure or lift at the air bearing surfaces 38, 39. In addition, a larger negative pressure is induced behind the front rail 36. The negative pressure is balanced with the lift so as to stably establish the flying attitude of the flying head slider 22.

The aforementioned electromagnetic transducer, namely a read/write magnetic head element 43, is mounted on the slider body 31. The read/write magnetic head element 43 is embedded within the head protection layer 35 of the head slider body 31. The read gap and the write gap of the read/write magnetic head element 43 are exposed at the air bearing surface 39 of the rear rail 37. It should be noted that the front end of the read/write magnetic head element 43 may be covered with a protection layer, made of diamond-like-carbon (DLC), extending over the air bearing surface 39. The write/read magnetic head element 43 will be described later in detail. The flying head slider 22 may take any shape or form other than the aforementioned one.

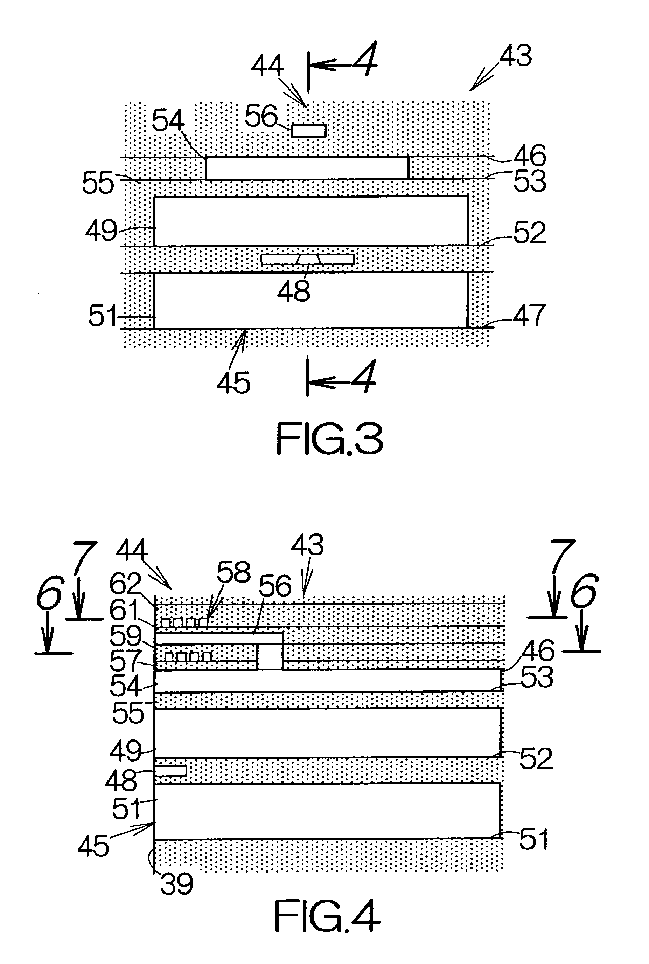

Fig. 3 illustrates the bottom surface 32 of the flying head slider 22 or air bearing surface 39 in detail. The read/write magnetic head element 43 includes a thin film magnetic head or single magnetic pole head 44 and a read head element 45. The single magnetic pole head 44 allows a magnetic coil to generate a magnetic field in response to the supply of electric current, for example. The generated magnetic field is utilized to record binary data into the magnetic recording disk 14. A magnetoresistive (MR) element such as a giant magnetoresistive (GMR) element and a tunnel-junction magnetoresistive (TMR) element may be employed as the read head element 45, for example. The read head element 45 is allowed to induce variation in the electric resistance in response to the inversion of polarization in the applied magnetic field from the magnetic recording disk 14. This variation in the electric resistance is utilized to detect binary data.

The single magnetic pole head 44 and the read head element 45 are interposed between an overcoat film 46 and an undercoat film 47, both made of Al₂O₃. The overcoat film 46 corresponds to the upper half of the aforementioned head protection layer 35, while the undercoat film 47 corresponds to the lower half of the head protection layer 35.

The read head element 45 includes a magnetoresistive film 48, such as a tunnel-junction film, interposed between upper and lower electrically-conductive layers or upper and lower shield layers 49, 51. The magnetoresistive film 48 is embedded within an insulting layer 52 covering over the upper surface of the lower shield layer 51. The insulting layer 52 is made of Al₂O₃, for example. The upper shield layer 49 extends along the upper surface of the insulting layer 52. The upper and lower shield layers 49, 51 may be made of a magnetic material such as FeN, NiFe, or the like. A gap between the upper and lower shield layers 49, 51 serves to determine a linear resolution of magnetic recordation on the magnetic recording disk 14 along the recording track.

The single magnetic pole head 44 includes an auxiliary magnetic pole 54 extending along a reference plane 53 over the upper shield layer 49. The front end of the auxiliary magnetic pole 54 is exposed at the air bearing surface 39. The auxiliary magnetic pole 54 is designed to extend backward from the exposed front end. The auxiliary magnetic pole 54 may be made of FeN, NiFe, or the like. The reference plane 53 is defined on the surface of a non-magnetic layer 55 overlaid on the upper shield layer 49 by a constant thickness. The non-magnetic layer 55 is made of Al₂O₃, for example. The non-magnetic layer 55 serves to establish a magnetic isolation between the upper shield layer 49 and the auxiliary magnetic pole 54.

A main magnetic pole 56, which is embedded within the overcoat film 46, is located at a position above the auxiliary magnetic pole 54 as described later. The front end of the main magnetic pole 56 is exposed at the air bearing surface 39. The main magnetic pole 56 includes a constant portion extending backward from the exposed front end. The constant portion is designed to have a constant width and a constant thickness. The rear end of the main magnetic pole 56 is magnetically connected to the auxiliary magnetic pole 54. The main magnetic pole 56 and the auxiliary magnetic pole 54 in combination establish a magnetic core. The main magnetic pole 56 may be made of FeN or NiFe, for example.

As shown in Fig. 4, an insulating layer 57 is formed on the surface of the auxiliary magnetic pole 54. A magnetic coil 58 is formed on the insulating layer 57. The magnetic coil 58 is a helical coil as described later. An insulating layer 59 and the aforementioned main magnetic pole 56 are formed on the surface of the insulating layer 57. Insulating layers 61, 62 are formed on the surface of the main magnetic pole 56. The magnetic coil 58 is embedded within the insulating layers 59, 61, 62. The insulating layers 57, 61 may be made of Al₂O₃, for example. The insulating layers 59, 62 may be made of a resin material such as a photoresist material, for example.

When a magnetic field is generated in the magnetic coil 58, a magnetic flux is leaked out of the front end of the main magnetic pole 56 toward the magnetic recording disk 14. The leaked magnetic flux forms a magnetic field for recordation. The magnetic flux is guided to the magnetic underlayer of the magnetic recording disk 14 along the vertical direction perpendicular to the surface of the magnetic recording disk 14. The magnetic flux circulates in the in-plane direction in the magnetic underlayer. The magnetic flux then circulates in the vertical direction from the magnetic underlayer toward the auxiliary magnetic pole 54. Magnetization in the vertical direction is in this manner established in the magnetic recording layer of the magnetic recording disk 14.

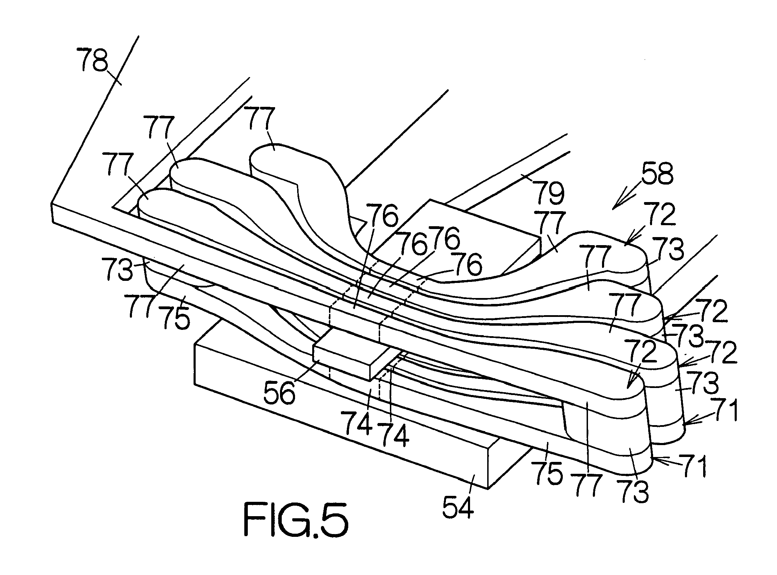

As shown in Fig. 5, the magnetic coil 58 includes lower coil pattern pieces 71, 71, ... and upper coil pattern pieces 72, 72, ... both having a constant thickness. The lower coil pattern pieces 71 extend in parallel with one another. Likewise, the upper coil pattern pieces 72 extend in parallel with one another. The insulating layers 59, 61 serve to isolate or insulate the upper coil pattern pieces 72 from the lower coil pattern pieces 71. The connecting coil pattern pieces 73 connect the outer ends of the lower coil pattern pieces 71 to the corresponding outer ends of the upper coil pattern pieces 72. The lower coil pattern pieces 71, the upper coil pattern pieces 72 and the connecting coil pattern pieces 73 may be made of an electrically-conductive material such as copper.

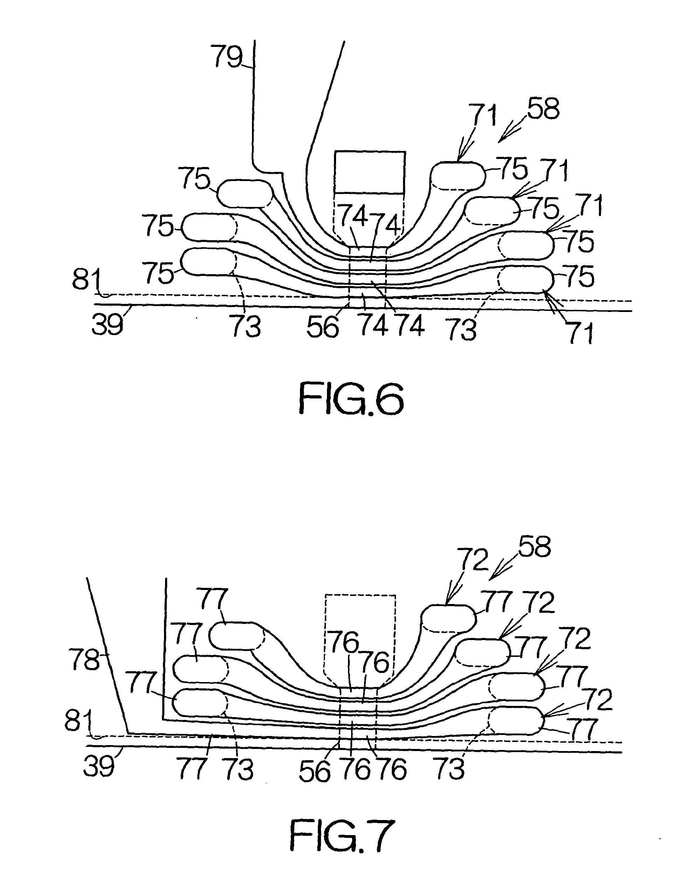

Referring also to Fig. 6, the individual lower coil pattern piece 71 includes a uniform lower coil pattern piece 74 extending in the lateral direction parallel to the air bearing surface 39 at a constant width. The uniform lower coil pattern pieces 74, 74, ... are arranged in the direction perpendicular to the air bearing surface 39. The uniform lower coil pattern piece 74 may be designed to have the minimum width in the lower coil pattern piece 71. The main magnetic pole 56 extends in the direction perpendicular to the air bearing surface 39 across the uniform lower coil pattern pieces 74 along the upper surface of the insulating layer 59. Here, the length of the uniform lower coil pattern pieces 74 may be set equal to the constant width of the main magnetic pole 56.

Enlarged lower coil pattern pieces 75, 75 are connected to the opposite ends of the individual uniform lower coil pattern piece 74, respectively. The individual enlarged lower coil pattern piece 75 gradually gets wider at a position remoter from the corresponding uniform lower coil pattern piece 74. The individual enlarged lower coil pattern piece 75 is contoured along a curved line. The enlarged lower coil pattern piece 75 gets remoter from the air bearing surface 39 at a position remoter from the corresponding uniform lower coil pattern piece 74. The aforementioned connecting coil pattern pieces 73 are connected to the corresponding outer ends of the enlarged lower coil pattern pieces 75. The lower end of the individual connecting coil pattern piece 73 is received on the widest portion of the lower coil pattern piece 71.

Referring also to Fig. 7, the individual upper coil pattern piece 72 includes a uniform upper coil pattern piece 76 extending in the lateral direction parallel to the air bearing surface 39 at a constant width. The uniform upper coil pattern pieces 76, 76, ... are arranged in the direction perpendicular to the air bearing surface 39. The uniform upper coil pattern piece 76 may be designed to have the minimum width in the upper coil pattern piece 72. The main magnetic pole 56 extends in the direction perpendicular to the air bearing surface 39 across the uniform upper coil pattern pieces 76 below the insulating layer 61. Here, the length of the uniform upper coil pattern pieces 76 may be set equal to the constant width of the main magnetic pole 56.

Enlarged upper coil pattern pieces 77, 77 are connected to the opposite ends of the individual uniform upper coil pattern piece 76, respectively. The individual enlarged upper coil pattern piece 77 gradually gets wider at a position remoter from the corresponding uniform upper coil pattern piece 76. The individual enlarged upper coil pattern piece 77 is contoured along a curved line. The enlarged upper coil pattern piece 77 gets remoter from the air bearing surface 39 at a position remoter from the corresponding uniform upper coil pattern piece 76. The aforementioned connecting coil pattern piece 73 is connected to the outer end of the enlarged upper coil pattern piece 77. The widest portion of the upper coil pattern piece 72 is received on the upper end of the connecting coil pattern piece 73.

Here, the "width" of the uniform lower coil pattern piece 74, the enlarged lower coil pattern piece 75, the uniform upper coil pattern piece 76 and the enlarged upper coil pattern piece 77 correspond to a dimension within a cross-section perpendicular to the lengthwise direction of the uniform upper and lower coil pattern piece 76,75 between the contour closest to the air bearing surface 39 and the contour remotest from the air bearing surface 39 in the direction perpendicular to the air bearing surface 39.

As is apparent from Fig. 5, the connecting coil pattern pieces 73 stand upright from the outer ends of the corresponding enlarged lower coil pattern pieces 75. The upper end of the individual connecting coil pattern piece 73 is connected to the outer end of the corresponding enlarged upper coil pattern piece 77. This results in establishment of a spiral form continuous from the enlarged upper coil pattern piece 77 closest to the air bearing surface 39 to the enlarged lower coil pattern piece 75 remotest from the air bearing surface 39. A path is in this manner established for electric current through the lower coil pattern pieces 71, the upper coil pattern pieces 72 and the connecting coil pattern pieces 73.

As is apparent from Figs. 6 and 7, a lead wiring 78 is connected to the end of the upper coil pattern piece 72 closest to the air bearing surface 39. A lead wiring 79 is likewise connected to the end of the lower coil pattern piece 71 remotest from the air bearing surface 39. Electric current is supplied to the magnetic coil 58 from one of the lead wirings 78, 79. The supplied electric current induces a magnetic field in the magnetic coil 58. A circulation path is in this manner established for a magnetic flux in the main magnetic pole 56 and the auxiliary magnetic pole 54.

The magnetic coil 58 allows the enlarged lower and upper coil pattern pieces 75, 77 closest to the air bearing surface 39 to expand backward from a plane 81 extending in parallel with the air bearing surface 39. The enlarged lower and upper coil pattern pieces 75, 77 can thus be located as close to the air bearing surface 39 as possible. This results in a minimized length of the main magnetic pole 56, namely of the portion having the constant width, in the direction perpendicular to the air bearing surface 39.

As is apparent from Figs. 6 and 7, the cross-section of the connecting coil pattern piece 73 is set to have a dimension larger in the direction parallel with the air bearing surface 39 than in the direction perpendicular to the air bearing surface 39. The connecting coil pattern piece 73 can thus be located as close to the air bearing surface 39 as possible, while the connecting coil pattern piece 73 is allowed to have a larger cross-section. This contributes to the minimization of the total length of the magnetic coil 58.

The single magnetic pole head 44 enables establishment of the narrowest width at the uniform lower and upper coil pattern pieces 74, 76 in the magnetic coil 58. The rear end of the main magnetic pole 56 can be connected to the auxiliary magnetic pole 54 at a position as close to the air bearing surface 39 as possible. The uniform lower and upper coil pattern pieces 74, 76 are allowed to have a minimum length in the direction parallel to the air bearing surface 39. The electric resistance is thus surely reduced in the magnetic coil 58. This results in establishment of an efficient magnetic property in the single magnetic pole head 44. The single pole magnetic head 44 is thus allowed to generate a larger magnetic field in response to the supply of high frequency write signals. Moreover, the single magnetic pole head 44 is prevented from excessively getting heated.

The enlarged lower and upper coil pattern pieces 75, 77 are contoured along curved lines as described above. No corner is formed along the contours of the enlarged lower and upper coil pattern pieces 75, 77. This avoids radiation of noise from the enlarged lower and upper coil pattern pieces 75, 77. The read head element 45 is thus allowed to reliably read out magnetic bit data with less influence from the single magnetic pole head 44. If any corner were formed along the contours, noise radiates from the corner so that a read operation could be deteriorated at the read head element 45.

Next, a brief description will be made on a method of making the read/write magnetic head element 43. A wafer made of Al₂O₃-TiC is first prepared, for example. The undercover film 47, the lower shield layer 51, the magnetoresistive film 48, the insulating layer 52, the upper shield layer 49, and the non-magnetic layer 55 are overlaid on the surface of the wafer in a conventional manner. This results in formation of the read head element 45.

The auxiliary magnetic pole 54 is formed on the surface of the non-magnetic layer 55. A joint is formed on the surface of the auxiliary magnetic pole 54 for a connection to the main magnetic pole 56. The insulating layer 57 made of Al₂O₃ is also overlaid on the surface of the auxiliary magnetic pole 54 around the joint. The lower coil pattern pieces 71 are then formed on the surface of the insulating layer 57. Gaps between the lower coil pattern pieces 71 are filled with a photoresist. The baked photoresist serves to form the insulating layer 59.

The main magnetic pole 56 is formed on the surface of the insulating layer 59. The main magnetic pole 56 is covered with the insulating layer 61 made of Al₂O₃. Voids are then formed in the insulating layers 59, 61. The voids penetrate through the insulating layers 59, 61. The surfaces of the lower coil pattern pieces 71 are exposed at the bottoms of the voids. The voids serve to define the contours of the connecting coil pattern pieces 73. The voids are filled with an electrically-conductive material. The connecting coil pattern pieces 73 are in this manner formed.

The upper coil pattern pieces 72 are formed on the surface of the insulating layer 61. The upper coil pattern pieces 72 are connected to the connecting coil pattern pieces 73. The magnetic coil 58 is in this manner formed. Gaps between the upper coil pattern pieces 72 are filled with a photoresist. The baked photoresist serves to form the insulating layer 62. The single magnetic pole head 44 is in this manner formed.

The inventor has observed effects of the magnetic coil 58 based on a simulation. The inventor made models of a specific example and a comparative example in the simulation. The specific example was the aforementioned single magnetic pole head 44. The comparative example was a conventional single magnetic pole head. The conventional single magnetic pole head includes the upper and lower coil pattern pieces and the connecting coil pattern pieces all having a constant thickness and a constant width. The finite element method, FEM, was utilized to evaluate the electric resistance of the magnetic coils.

The single magnetic pole head 44 according to the specific example exhibited the electric resistance of 1.4Ω, approximately. The single magnetic pole head according to the comparative example exhibited the electric resistance of 2.1Ω, approximately. The electric resistance of the single magnetic pole head 44 according to the specific example of the present invention is reduced by 35% approximately from that of the single magnetic pole head according to the comparative example. It has been demonstrated that the single magnetic pole head 44 of the present invention keeps a sufficient magnetic force or field in an efficient manner.

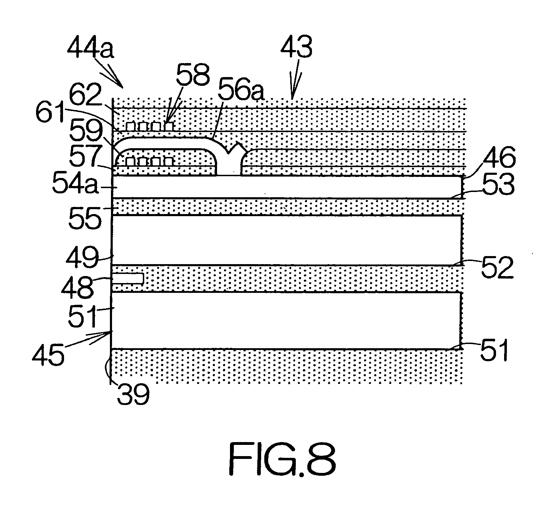

Alternatively, the read/write magnetic head element 43 may allow replacement of the aforementioned single magnetic pole element 44 with a thin film magnetic head 44a for the in-plane recording, as shown in Fig. 8. The thin film magnetic head 44a includes an upper magnetic pole 56a and a lower magnetic pole 54a. The insulating layer 57 serves as a gap layer between the upper and lower magnetic pole 56a, 54a along the air bearing surface 39. The thin film magnetic head 44a requires a reduced thickness of the gap layer as compared with the aforementioned single magnetic pole head 44. The thin film magnetic head 44a of the type may be utilized in combination with the magnetic recording disk or disks 14 having the magnetization in plane. Like reference numerals are attached to structure or components equivalent to those of the aforementioned embodiment. The thin film magnetic head 44a is allowed to enjoy advantages identical to those obtained in the aforementioned single magnetic pole head 44.

## Claims

1. A thin film magnetic head comprising:
uniform lower coil pattern pieces extending at a constant width, said uniform lower coil pattern pieces arranged in a direction perpendicular to a medium-opposed surface;
uniform upper coil pattern pieces extending at a constant width, said uniform upper coil pattern pieces arranged in the direction perpendicular to the medium-opposed surface;
an insulating layer interposed between the uniform lower coil pattern pieces and the uniform upper coil pattern pieces;
enlarged lower coil pattern pieces each extending from opposite ends of the uniform lower coil pattern piece at a width getting larger at a position remoter from the uniform lower coil pattern piece;
enlarged upper coil pattern pieces each extending from opposite ends of the uniform upper coil pattern piece at a width getting larger at a position remoter from the uniform upper coil pattern piece;
a connecting coil pattern piece standing from an outer end of the enlarged lower coil pattern piece, said connecting coil pattern piece having an upper end connected to an outer end of the enlarged upper coil pattern piece; and
a magnetic pole having a front end exposed at the medium-opposed surface, said magnetic pole extending in the insulating layer backward from the front end in the direction perpendicular to the medium-opposed surface, length of the uniform lower coil pattern pieces and the uniform upper coil pattern pieces corresponding to width of the magnetic pole.

2. The thin film magnetic head according to claim 1, wherein at least one of the enlarged upper and lower coil pattern pieces near the medium-opposed surface expands backward from a plane extending in parallel with the medium-opposed surface.

3. The thin film magnetic head according to claim 1 or 2, wherein
a dimension of a cross section of the connecting coil pattern piece is set larger in a direction parallel to the medium-opposed surface than in a direction perpendicular to the medium-opposed surface.

4. The thin film magnetic head according to any of the preceding claims, wherein
contours of the enlarged upper and lower coil pattern pieces are defined along curved lines.
